(19) **Europäisches Patentamt / European Patent Office / Office européen des brevets**

(11) **EP 2 824 739 B1**

(12) **EUROPEAN PATENT SPECIFICATION**

(45) Date of publication and mention
of the grant of the patent:
**26.12.2018 Bulletin 2018/52**

(21) Application number: **14186646.7**

(22) Date of filing: **21.09.2006**

(51) Int Cl.:
*H01M 4/58* (2010.01)     *H01M 10/05* (2010.01)
*H01M 6/16* (2006.01)      *H01M 4/133* (2010.01)
*H01M 4/134* (2010.01)     *H01M 4/136* (2010.01)
*H01M 4/137* (2010.01)     *H01M 4/60* (2006.01)
*H01M 10/052* (2010.01)

(54) **Lithium-sulphur battery with high specific energy**

Lithium-Schwefelbatterie mit hoher spezifischer Energie

Batterie au lithium-soufre avec une énergie spécifique élevée

(84) Designated Contracting States:
**AT BE BG CH CY CZ DE DK EE ES FI FR GR HU
IE IS IT LI LT LU LV MC NL PL PT RO SE SI SK TR**

(30) Priority: **26.09.2005 GB 0519491
28.09.2005 US 721062 P
08.11.2005 US 734320 P**

(43) Date of publication of application:
**14.01.2015 Bulletin 2015/03**

(62) Document number(s) of the earlier application(s) in
accordance with Art. 76 EPC:
**06779643.3 / 1 941 568**

(73) Proprietor: **Oxis Energy Limited
Abingdon
Oxfordshire OX14 3DB (GB)**

(72) Inventors:
• **Kolosnitsyn, Vladimir
Abingdon, Oxfordshire OX14 3DB (GB)**
• **Karaseva, Elena
Abingdon, Oxfordshire OX14 3DB (GB)**

(74) Representative: **HGF Limited
8th Floor
140 London Wall
London EC2Y 5DN (GB)**

(56) References cited:
**EP-A- 1 178 555      GB-A- 2 084 391
US-A- 4 218 523      US-A1- 2002 045 101
US-A1- 2002 192 557**

Remarks:
The file contains technical information submitted after
the application was filed and not included in this
specification

## Description

TECHNICAL FIELD

The present invention relates to electrochemical power engineering, in particular it relates to chemical sources of electric energy (cells or batteries) comprising negative electrodes made of alkali metals and positive electrodes comprising sulphur and/or sulphur-based non-organic or organic (including polymeric) compounds as an electrode depolarizer substance.

BACKGROUND

The lithium-sulphur electrochemical system has a high theoretical specific energy of 2600 Wh/kg (D. Linden, T.B. Reddy, Handbook of batteries, third ed., McGraw-Hill, New-York, 2001), and is therefore of great interest at present. Specific energy is defined as the ratio of the energy output of a cell or battery to its weight, and is expressed in Wh/kg. The term specific energy is equivalent to the term gravimetric energy density.

It has been proposed to use various materials as a depolarizer substance for the positive electrode in lithium-sulphur batteries: elemental sulphur (US 5,789,108; US 5,814,420), sulphur-organic compounds (US 6,090,504), sulphur-containing polymers (US 6,201,100; US 6,174,621; US 6,117,590), and solutions of sulphur or lithium polysulphides in aprotic electrolyte systems (Rauh R.D., Abraham K.M., Pearson G.F., Surprenant J.K., Brummer S.B.: "A lithium/dissolved sulphur battery with an organic electrolyte", J. Electrochem.Soc. 1979, vol. 126, no. 4, pp 523-527; Yamin H., Peled E.: "Electrochemistry of a nonaqueous lithium/sulphur cell", J. of Power Sources, 1983, vol. 9, pp 281-287).

Solutions of lithium salts in aprotic dipolar solvents (typically linear or cyclic ethers) or their mixtures have been used as electrolytes in lithium-sulphur batteries (Yamin H., Penciner J., Gorenshtain A., Elam M., Peled E.: "The electrochemical behavior of polysulphides in tetrahydrofuran", J. of Power Sources, 1985, vol. 14, pp 129-134; Yamin H., Gorenshtein A., Penciner J., Sternberg Y., Peled E.: "Lithium sulphur battery. oxidation/reduction mechanisms of polysulphides in THF solution", J. Electrochem. Soc., 1988, vol. 135, no. 5, pp 1045-1048; Duck-Rye Chang, Suck-Hyun Lee, Sun-Wook Kim, Hee-Tak Kim: "Binary electrolyte based on tetra(ethylene glycol) dimethyl ether and 1,3-dioxolane for lithium-sulphur battery", J. of Power Sources, 2002, vol. 112, pp 452-460).

The practical specific energy of a typical chemical source of electric energy usually reaches 20-30% of the theoretical maximum value of the specific energy of the electrochemical system that is employed. This is because various auxiliary elements (the separator, the current collectors of the electrodes, the electrolyte and other components) of the battery contribute to its total weight in addition to the electrode depolarizers. The auxiliary elements of the battery design do not themselves take part in the electrochemical reaction itself, but are provided so as to facilitate the reaction process and to promote normal functioning of the battery.

The value of the practical specific energy for laboratory lithium-sulphur cells generally reaches only 10-15% of its theoretical value, and is typically around 250-350 Wh/kg (J. Broadhead, T. Skotheim: "A safe, fast-charge, two-volt lithium/polymer cathode 'AA'-size cell with a greater than 250 Wh kg-1 energy density", Journal of Power Sources, 65 (1997), 1-2, 213-218; Peled E., Gorenshtein A., Segal M., Sternberg Y.: "Rechargeable lithium-sulphur battery (extended abstract)", J. of Power Sources, 1989, vol. 26, pp 269-271).

BRIEF SUMMARY OF THE DISCLOSURE

Disregarding the weight of the auxiliary battery elements, the difference between the theoretical and the practical values for the specific energies of laboratory lithium-sulphur cells is due to insufficient utilization of the positive electrode depolarizer (sulphur or sulphur-based compounds) and the excess quantity of electrolyte that is generally provided.

Embodiments of the present invention seek at least substantially to optimize the electrolyte quantity in lithium-sulphur cells, and thereby to improve their practical specific energy.

DETAILED DESCRIPTION OF THE INVENTION

The specific energy of a chemical source of electric energy is determined by the theoretical specific energy of the selected electrochemical system, as well as by the weight of auxiliary components required to ensure the proper operation of the chemical source of electric energy (e.g. a separator, current collectors of electrodes, a binder, current conducting additives, an electrolyte and other components), and also by the degree (efficiency) of utilization of the depolarizer. The weight of the auxiliary components generally makes up 70-80% of the total weight of the cell. In order to achieve improved specific energy characteristics, the weight of the auxiliary components must be reduced.

The weight of the electrolyte is a significant part of the total weight of the chemical source of electric energy. The electrolyte performs supplementary functions in chemical sources of electric energy with solid depolarizers, for example supporting the electrochemical reaction process and providing ion transport between the electrodes. Therefore in such systems it is desirable to minimize the quantity of the electrolyte.

However, in chemical sources of electric energy comprising liquid cathodes, the electrolyte may consist of a salt solution in a liquid depolarizer (for example a solution of lithium tetrachloroaluminate in thionyl chloride), or a salt solution in a mixture of a liquid depolarizer and an aprotic solvent (for example a solution of lithium bromide in a mixture of sulphurous anhydride and acetonitrile), or a salt solution in a solution of a liquid depolarizer in an aprotic solvent (for example a lithium perchlorate solution in a solution of lithium polysulphide in tetrahydrofuran) (D. Linden, T.B. Reddy: "Handbook of batteries", third ed., McGraw-Hill, New York, 2001).

The electrolyte in chemical sources of electric energy comprising liquid cathodes performs a wider range of functions than the electrolyte used in systems having solid cathodes. The electrolyte not only supports the electrochemical reaction and ion transport between the electrodes, but serves as a solvent for a depolarizer of the positive electrode. Accordingly, when aprotic solvents are used as a component of a liquid cathode, the specific power characteristics of chemical sources of electric energy with liquid cathodes depend on the content of the aprotic solvents and hence on the content of the liquid cathode.

Despite the fact that sulphur and lithium sulphide are poorly soluble in aprotic solvents, lithium-sulphur batteries are classified as batteries with liquid cathodes. This is because of the formation of well-soluble products, lithium polysulphides, that occur during charge and discharge of such batteries.

The liquid cathode is formed in lithium-sulphur batteries during discharge of the sulphur electrode. The electrochemical oxidation of sulphur is realised by way of two stages. In the first stage, long-chain lithium polysulphides (which are well-soluble in aprotic electrolytes) are generated during the electrochemical oxidation of elemental sulphur, which is non-soluble or poorly soluble in most electrolyte systems (Equation 1).

$$S_8 \ + \ 2e^- \ \rightarrow \ S_8^{2-}$$
$$S_8^{2-} \rightarrow \ S_6^{2-} + 1/4\ S_8 \qquad \text{Equation 1}$$
$$S_6^{2-} \rightarrow \ S_4^{2-} \ + \ 1/4 S_8$$

The solution of lithium polysulphides in electrolyte which is formed in the initial discharge phase is known to be a liquid cathode.

In the second stage, an electrochemical reduction of soluble lithium polysulphides occurs (Equation 2). During this phase, sulphide or disulphide anions are formed, which, by reacting with lithium cations, form non-soluble products: lithium sulphide and lithium disulphide.

$$S_n^{2-} + 2(n-1)e^- \rightarrow nS^{2-}$$
$$S_n^{2-} + (n-2)e^- \rightarrow (1/2n)S_2^{2-} \qquad \text{Equation 2}$$

The reduction of soluble lithium polysulphides is accompanied by disproportionation reactions (Equation 3).

$$2S_n^{2-} \rightarrow S_{n-1}^{2-} + S_{n+1}^{2-}$$
$$2S_{n+1}^{2-} \rightarrow S_{n+2}^{2-} + S_n^{2-} \qquad \text{Equation 3}$$
$$2S_{n-1}^{2-} \rightarrow S_{n-2}^{2-} + S_n^{2-}$$

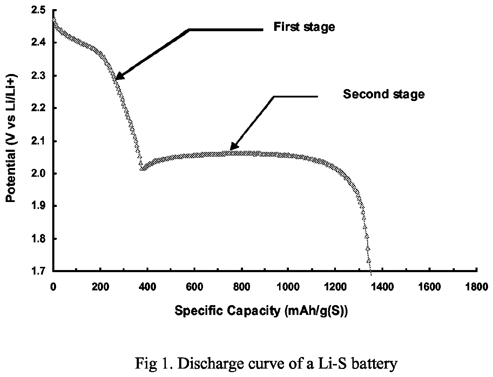

The two stage mechanism of sulphur reduction is clearly seen in the discharge curves for lithium-sulphur batteries as shown in Figure 1. It is represented by two discharge regions: a first region in the voltage range from 2.5-2.4V to 2.1-1.9V corresponds to the first discharge phase (Equation 1); and a second region in the voltage range from 2.1-1.9V to 1.8-1.5V corresponds to the second (Equation 2).

The efficiency of sulphur utilization in lithium-sulphur batteries is determined by the quantitative ratio of sulphur to electrolyte.

When the amount of electrolyte is relatively low, not all of the sulphur and long-chain lithium polysulphides undergo subsequent electrochemical reduction because of the formation of highly viscous saturated solutions of polysulphides. This results in a decrease in the practical specific energy of lithium-sulphur batteries.

When there is an excess of electrolyte, the specific energy of lithium-sulphur batteries is still lower than the maximum possible because of the quantitative excess of electrolyte which contributes to the overall weight of a cell. A particular ratio of sulphur to electrolyte should be maintained for each type of electrolyte so as to reach or at least approach the maximum possible practical specific energy.

This ratio depends on the properties of the electrolyte system. In particular, the ratio depends on the solubility of initial, intermediate and final compounds.

To achieve the best practical specific energy characteristics of lithium-sulphur batteries, the electrolyte content in the batteries should be chosen in a way that provides complete dissolution of lithium polysulphides (formed at the first stage) with formation of liquid cathodes with moderate viscosity. The present applicant has found that such a condition is provided when, during discharge of the sulphur electrode, the concentration of soluble polysulphides in the electrolyte is at least 70%, and preferably from 70 to 90%, of the saturation concentration.

According to the present invention, there is provided a chemical source of electric energy comprising a positive electrode (cathode) including sulphur or sulphur-based organic compounds, sulphur-based polymeric compounds or sulphur-based inorganic compounds as a depolarizer, a negative electrode (anode) made of metallic lithium or lithium-containing alloys, and an electrolyte comprising a solution of at least one salt in at least one aprotic solvent, the chemical source of electric energy being configured to generate soluble polysulphides in the electrolyte during a first stage of a two stage discharge process, characterised in that the quantity of sulphur in the depolariser and the volume of electrolyte are selected such that, after first stage discharge of the cathode, the concentration of the soluble polysulphides in the electrolyte is at least 70% of a saturation concentration of the polysulphides in the electrolyte.

Preferably, the quantity of sulphur in the positive electrode and the volume of electrolyte are selected such that, after first stage discharge of the cathode, the concentration of the soluble polysulphides in the electrolyte is from 70 to 90% of a saturation concentration of the polysulphides in the electrolyte.

In one particular embodiment, the depolarizer includes sulphur, carbon black and polyethylene oxide.

The electrolyte may comprise a solution of one or several lithium salts selected from the group consisting of: lithium trifluoromethanesulphonate, lithium perchlorate, lithium trifluoromethanesulfonimide, lithium hexafluorophosphate, lithium hexafluoroarsenate, lithium tetrachloroaluminate, tetraalkylammonium salt, lithium chloride, lithium bromide and lithium iodide; in one or several solvents selected from the group consisting of: dioxolane, tetrahydrofuran, dimethoxyethane, diglyme, triglyme, tetraglyme, dialkyl carbonates, sulfolane and butyrolactone.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

BRIEF DESCRIPTION OF THE DRAWINGS

For a better understanding of the present invention and to show how it may be carried into effect, reference shall now be made by way of example to the accompanying drawing, in which:

FIGURE 1 is a plot showing the two stage discharge process of a lithium-sulphur battery of an embodiment of the present invention.

DETAILED DESCRIPTION

EXAMPLES

Example 1

A positive electrode comprising 70% elemental sublimed sulphur (available from Fisher Scientific, Loughborough, UK), 10% electroconductivity carbon black (Ketjenblack® EC-600JD, available from Akzo Nobel Polymer Chemicals BV, Netherlands) and 20% polyethylene oxide (PEO, 4,000,000 molecular weight, available from Sigma-Aldrich Company Ltd., Gillingham, UK) was produced by the following procedure.

A dry mixture of these components was ground in a high-speed Microtron® MB550 mill for 10-15 minutes. Then acetonitrile was added as a solvent to the dry mixture and the suspension was mixed for 15-20 hours with a DLH laboratory stirrer. The solids content of the suspension was 10-15%. The suspension thus produced was applied by an automatic film applicator Elcometer® SPRL to one side of a 12$\mu$m thick aluminium foil with an electroconductive carbon coating (Product No. 60303 available from Rexam Graphics, South Hadley, Mass.) as a current collector.

The coating was dried at ambient conditions for 20 hours and then in a vacuum at 50°C for 5 hours. The resulting dry cathode active layer had a thickness of 19$\mu$m and contained 2.01mg/cm$^2$ of cathode mixture. The specific surface capacity of the electrode was 2.35mA*h/cm$^2$.

**Example 2**

The positive electrode from the Example 1 was used in a small assembly cell made of stainless steel. The cathode surface area was 5.1cm$^2$. A pressure of 400kg/cm$^2$ was applied to the electrode before it was used in the cell. The cathode thickness after pressing was 16$\mu$m. A 1.0M solution of lithium trifluoromethanesulphonate (available from 3M Corporation, St. Paul, Minn.) in sulfolane was used as an electrolyte. Celgard® 2500 (a trade mark of Tonen Chemical Corporation, Tokyo, Japan, and also available from Mobil Chemical Company, Films Division, Pittsford, N.Y.) was used as a separator. These components were assembled to form a laminated structure comprising positive electrode/separator/anode together with the liquid electrolyte filling up the free volume of the separator and the positive electrode. The cells were assembled as follows. The positive electrode was inserted into the cell. Then 4 microlitres of electrolyte were deposited onto the electrode by using a constant rate syringe CR-700 (Hamilton Co). The separator was placed on top of the wetted electrode and 3 microlitres of electrolyte were deposited onto the separator. Then a lithium electrode made of 38$\mu$m thick lithium foil was placed on top of the separator. After the electrode stack was assembled, the cell was hermetically sealed by a lid containing a Teflon® sealing. The ratio of sulphur to electrolyte was 1ml of electrolyte to 1g of sulphur. After complete dissolution of the sulphur in the form of lithium polysulphide during discharge of the cell, the maximum sulphur concentration in the electrolyte was determined as 31.25 mole/litre.

Charge-discharge cycling of the cell was carried out at a current of 1.5mA which was equivalent to a current density of 0.3mA/cm$^2$ with a discharge cut-of voltage at 1.5V and charge termination at 2.8V. The total weight of the cell and the weight distribution between elements of the cell are given in the Table 1, with properties of the cell being shown in Table 2.

The specific energy of the cell was calculated from the capacity at the second cycle by dividing the capacity by the weight of the electrode stack including the electrolyte.

**Table 1** Weight distribution between components of lithium-sulphur cell from Example 2

| Component of the cell | Weight, g | Part, % |
|---|---|---|
| Lithium | 0.00551 | 13.1 |
| Sulphur | 0.00715 | 17 |
| Binder | 0.00204 | 4.8 |
| Carbon | 0.00102 | 2.4 |
| Substrate (+) | 0.01021 | 24.3 |
| Separator | 0.00613 | 14.6 |
| Electrolyte | 0.01001 | 23.8 |
| **Total weight of the cell** | **0.04207** | **100.0** |

**Table 2** Parameters of lithium-sulphur cell from Example 2

| | |
|---|---|
| Total quantity of electrolyte, ml | 0.007 |
| Electrolyte quantity per 1g of sulphur, ml | 1 |
| Electrolyte quantity per 1 mAh of positive electrode capacity, ml/mAh | 0.00058 |
| Calculated lithium polysulphide concentration in electrolyte after the 1st stage, mole/litre | 31.25 |
| Specific energy, Wh/kg | 119 |
| Energy density, Wh/l | 130 |

## Example 3

A lithium-sulphur cell was assembled in the same way as described in Example 2, except in that 11 microlitres of electrolyte were deposited onto the positive electrode and 3 microlitres of electrolyte were deposited onto the separator. The total electrolyte content in the cell was 14 microlitres, which amounts to 2ml of electrolyte per 1g of sulphur. Cycling of the cell was performed in the same way as in Example 2. The parameters of the cell are shown in Tables 3 and 4.

**Table 3** Weight distribution between components of lithium-sulphur cell from Example 3

| Component of the cell | Weight, g | Part, % |
|---|---|---|
| Lithium | 0.00551 | 10.6 |
| Sulphur | 0.00715 | 13.7 |
| Binder | 0.00204 | 3.9 |
| Carbon | 0.00102 | 2 |
| Substrate (+) | 0.01021 | 19.6 |
| Separator | 0.00613 | 11.8 |
| Electrolyte | 0.02002 | 38.4 |
| **Total weight of the cell** | 0.05208 | 100 |

**Table 4** Parameters of lithium-sulphur cell from Example 3

| | |
|---|---|
| Total electrolyte quantity, ml | 0.014 |
| Electrolyte quantity per 1g of sulphur, ml | 1.96 |
| Electrolyte quantity per 1 mAh of a positive electrode, ml/mAh | 0.00117 |
| Calculated lithium polysulphide concentration in electrolyte after the 1st stage, mole/litre | 15.62 |
| Specific energy, Wh/kg | 265 |
| Energy density, Wh/l | 301 |

## Example 4

A lithium-sulphur cell was assembled in the same way as described in Example 2, except in that 22 microlitres of the electrolyte were deposited onto the positive electrode and 3 microlitres of electrolyte were deposited onto the separator. The total electrolyte content of the cell was 25 microlitres, which corresponds to 3.5ml of electrolyte per 1g of sulphur. Cycling of the cell was performed in the same way as in Example 2. The parameters of the cell are shown in Tables 5 and 6.

**Table 5** Weight distribution between components of lithium-sulphur cell from Example 4

| Component of the cell | Weight, g | Part, % |
|---|---|---|
| Lithium | 0.00551 | 8.2 |
| Sulphur | 0.00715 | 10.8 |
| Binder | 0.00204 | 3 |
| Carbon | 0.00102 | 1.5 |
| Substrate (+) | 0.01021 | 15.2 |
| Separator | 0.00613 | 9.1 |
| Electrolyte | 0.03504 | 52.2 |
| **Total weight of the cell** | **0.0671** | **100.0** |

**Table 6** Parameters of lithium-sulphur cell from Example 4

| | |
|---|---|
| Total electrolyte quantity, ml | 0.025 |
| Electrolyte quantity for 1g of sulphur, ml | 3.5 |
| Electrolyte quantity for 1 mAh of positive electrode capacity, ml/mAh | 0.0021 |
| Calculated lithium polysulphide concentration in electrolyte after the 1st stage, mole/litre | 8.928 |
| Specific energy, Wh/kg | 300 |
| Energy density, Wh/l | 355 |

## Example 5

A lithium-sulphur cell was assembled in the same way as described in Example 2, except in that 49 microlitres of electrolyte were deposited onto the positive electrode and 3 microlitres of electrolyte were deposited onto the separator. The total electrolyte content of the cell was 52 microlitres, which is 5.2ml of electrolyte per 1g of sulphur. Cycling of the cell was performed in the same way as in Example 2. The parameters of the cell are shown in Tables 7 and 8.

**Table 7** Weight distribution between components of the lithium-sulphur cell from Example 5

| Component of the cell | Weight, g | Part, % |
|---|---|---|
| Lithium | 0.00551 | 5.3 |
| Sulphur | 0.00715 | 6.9 |
| Binder | 0.00204 | 2 |
| Carbon | 0.00102 | 1 |
| Substrate (+) | 0.01021 | 9.8 |
| Separator | 0.00613 | 5.8 |
| Electrolyte | 0.07207 | 69.2 |
| **Total weight of the cell** | 0.10413 | 100.0 |

**Table 8** Parameters of the lithium-sulphur cell from Example 5

| | |
|---|---|
| Total electrolyte quantity, ml | 0.052 |
| Electrolyte quantity per 1g of sulphur, ml | 7.2 |
| Electrolyte quantity per 1 mAh of positive electrode, ml/mAh | 0.0043 |
| Calculated lithium polysulphide concentration in electrolyte after the 1st stage, mole/litre | 4.344 |
| Specific energy, Wh/kg | 193 |
| Energy density, Wh/l | 242 |

## Example 6

A lithium-sulphur cell was assembled in the same way as described in Example 2, except in that 69 microlitres of electrolyte were deposited onto the positive electrode and 3 microlitres of electrolyte were deposited onto the separator. The total electrolyte content of the cell was 72 microlitres, which amounts to 7.2ml of electrolyte per 1g of sulphur. Cycling of the cell was performed in the same way as in Example 2. The parameters of the cell are shown in Tables 9 and 10.

**Table 9** Weight distribution between components of lithium-sulphur cell from Example 6

| Component of the cell | Weight, g | Part, % |
|---|---|---|
| Lithium | 0.00551 | 4.2 |
| Sulphur | 0.00715 | 5.5 |
| Binder | 0.00204 | 1.5 |
| Carbon | 0.00102 | 0.8 |

(continued)

| Component of the cell | Weight, g | Part, % |
|---|---|---|
| Substrate (+) | 0.01021 | 7.7 |
| Separator | 0.00613 | 4.6 |
| Electrolyte | 0.1001 | 75.7 |
| **Total weight of the cell** | 0.13216 | 100.0 |

**Table 10** Parameters of lithium-sulphur cell from Example 6

| | |
|---|---|
| Total electrolyte quantity, ml | 0.072 |
| Electrolyte quantity for 1g of sulphur, ml | 10 |
| Electrolyte quantity for 1 mAh of positive electrode capacity, ml/mAh | 0.006 |
| Calculated lithium polysulphide concentration in electrolyte after the 1st stage, mole/litre | 3.128 |
| Specific energy, Wh/kg | 162 |
| Energy density, Wh/l | 207 |

## Example 7

The ultimate or saturation solubility of sulphur in the form of lithium octasulphide in 1.0M solution of lithium trifluoromethanesulphonate in sulfolane was evaluated. The evaluation of solubility was carried out in the following way: 1.0g of a mixture of lithium sulphide and sulphur (the content of sulphur in the mixture was 0.86g) was taken in a molar ratio 1:7 and placed in a sealed glass reactor in an air thermostat, the reactor being fitted with a mechanical blender and a metering device. The thermostat temperature was set to 30°C. A 1.0M solution of lithium trifluoromethanesulphonate in sulfolane was added in small portions to the reactor under constant mixing. After addition of each new portion the reaction mixture was thoroughly mixed for 5-6 hours so as to establish a thermodynamic equilibrium. The solubility of the solid phase was evaluated visually. If the reaction mixture contained some solid phase residues, then a further portion of electrolyte was added. The experiment was carried out until the solid phase dissolved completely. The results showed that 1.0g of a mixture of lithium sulphide and sulphur taken in the molar ratio 1:7 was fully dissolved in 3.3ml of the electrolyte solution; in other words the solubility of sulphur in form of lithium octasulphide was established to be about 0.96M/litre of electrolyte.

## Example 8

The results of Examples 2-7 are summarised in Figure 1 which shows the dependence of specific energy of a bare lithium-sulphur cell versus the ratio of electrolyte:sulphur. It can be seen that this dependence has a maximum which is reached at a ratio of electrolyte:sulphur close to 3. In other words, the maximum capacity of a lithium-sulphur cell is reached at a volume-weight ratio of electrolyte:sulphur that is close to the ultimate or saturation solubility of lithium octasulphide in electrolyte.

The presence of the maximum is explained by the fact that at low values of the electrolyte:sulphur ratio the efficiency of sulphur utilization is low, while at higher ratios the excess of electrolyte contributes just an additional mass to the cell thus resulting in a decrease of the specific energy.

## Claims

1. A rechargeable chemical source of electric energy comprising a positive electrode (cathode) including sulphur or sulphur-based organic compounds, sulphur-based polymeric compounds or sulphur-based inorganic compounds as a depolarizer, a negative electrode (anode) made of metallic lithium or lithium-containing alloys, and an electrolyte comprising a solution of at least one salt in at least one aprotic solvent, the chemical source of electric energy being configured to generate soluble polysulphides in the electrolyte during a first stage of a two stage discharge process, **characterised in that** the quantity of sulphur in the depolariser and the volume of electrolyte are selected such that, after first stage discharge of the cathode, the concentration of the soluble polysulphides in the electrolyte is from 70% to 90% of the saturation concentration of the polysulphides in the electrolyte.

2. A rechargeable chemical source of electric energy as claimed in claim 1, wherein the depolarizer includes sulphur, carbon black and polyethylene oxide.

3. A rechargeable chemical source of electric energy as claimed in any preceding claim, wherein the electrolyte comprises a solution of one or several lithium salts selected from the group consisting of: lithium trifluoromethanesulphonate, lithium perchlorate, lithium trifluoromethanesulfonimide, lithium hexafluorophosphate, lithium hexafluoroarsenate, lithium tetrachloroaluminate, tetraalkylammonium salt, lithium chloride, lithium bromide and lithium iodide; in one or several solvents selected from the group consisting of: dioxolane, tetrahydrofuran, dimethoxyethane, diglyme, triglyme, tetraglyme, dialkyl carbonates, sulfolane and butyrolactone.

4. A rechargeable chemical source of electric energy as claimed in any preceding claim, wherein the electrolyte comprises a solution of one or several lithium salts selected from the group consisting of: lithium trifluoromethanesulphonate, lithium perchlorate, lithium trifluoromethanesulfonimide, lithium hexafluorophosphate, lithium hexafluoroarsenate, lithium tetrachloroaluminate, tetraalkylammonium salt, lithium chloride, lithium bromide and lithium iodide in sulfolane.

5. A method discharging a rechargeable chemical source of energy as claimed in any preceding claim in two stages, said method comprising the steps of:

configuring the chemical source of energy to generate soluble polysulphides in the electrolyte during a first shape of the two stage discharge process; and
selecting the quantity of sulphur in the depolariser and the volume of electrolyte such that, after the first stage discharge of the cathode, the concentration of the soluble polysulphides in the electrolyte, from 70 to 90% of the saturation concentration of the polysulphides in the electrolyte.

6. A method as claimed in claim 5, wherein the first stage of discharge occurs at a voltage range of from 2.5-2.4V to 2.1-1.9V, and wherein the second stage of discharge occurs at a voltage range of 1.9 to 1.8-1.5V.

**Patentansprüche**

1. Wiederaufladbare chemische Quelle von elektrischer Energie, die eine positive Elektrode (Kathode), die Schwefel oder organische Verbindungen auf Schwefelbasis, polymere Verbindungen auf Schwefelbasis oder anorganische Verbindungen auf Schwefelbasis als einen Depolarisierer einschließt, eine negative Elektrode (Anode), die aus metallischem Lithium oder lithiumenthaltenden Legierungen besteht, und einen Elektrolyten umfasst, der eine Lösung von wenigstens einem Salz in wenigstens einem aprotischen Lösungsmittel umfasst, wobei die chemische Quelle von elektrischer Energie dazu konfiguriert ist, während einer ersten Stufe eines zweistufigen Entladungsprozesses lösliche Polysulfide in dem Elektrolyten zu erzeugen, **dadurch gekennzeichnet, dass** die Quantität an Schwefel in dem Depolarisierer und das Volumen des Elektrolyten so ausgewählt sind, dass nach einer Entladung der Kathode in der ersten Stufe die Konzentration der löslichen Polysulfide in dem Elektrolyten bei 70 % bis 90 % der Sättigungskonzentration der Polysulfide in dem Elektrolyten liegt.

2. Wiederaufladbare chemische Quelle von elektrischer Energie nach Anspruch 1, wobei der Depolarisierer Schwefel, Ruß und Polyethylenoxid einschließt.

3. Wiederaufladbare chemische Quelle von elektrischer Energie nach einem der vorhergehenden Ansprüche, wobei der Elektrolyt eine Lösung von einem oder mehreren Lithiumsalzen umfasst, ausgewählt aus der Gruppe bestehend aus: Lithiumtrifluormethansulfonat, Lithiumperchlorat, Lithiumtrifluormethansulfonimid, Lithiumhexafluorphosphat, Lithiumhexafluorarsenat, Lithiumtetrachloroaluminat, Tetraalkylammoniumsalz, Lithiumchlorid, Lithiumbromid und Lithiumiodid; in einem oder mehreren Lösungsmitteln ausgewählt aus der Gruppe bestehend aus: Dioxolan, Tetrahydrofuran, Dimethoxyethan, Diglym, Triglym, Tetraglym, Dialkylcarbonate, Sulfolan und Butyrolacton.

4. Wiederaufladbare chemische Quelle von elektrischer Energie nach einem der vorhergehenden Ansprüche, wobei der Elektrolyt eine Lösung von einem oder mehreren Lithiumsalzen umfasst, ausgewählt aus der Gruppe bestehend aus: Lithiumtrifluormethansulfonat, Lithiumperchlorat, Lithiumtrifluormethansulfonimid, Lithiumhexafluorphosphat, Lithiumhexafluorarsenat, Lithiumtetrachloroaluminat, Tetraalkylammoniumsalz, Lithiumchlorid, Lithiumbromid und Lithiumiodid in Sulfolan.

5. Verfahren zum Entladen einer wiederaufladbaren chemischen Energiequelle nach einem der vorhergehenden Ansprüche in zwei Stufen, wobei das Verfahren die folgenden Schritte umfasst:

Konfigurieren der chemischen Energiequelle dazu, während einer ersten Stufe des zweistufigen Entladungsprozesses in dem Elektrolyten lösliche Polysulfide zu erzeugen; und
Auswählen der Quantität an Schwefel in dem Depolarisierer und des Volumens des Elektrolyten, sodass nach der Entladung der Kathode in der ersten Stufe die Konzentration der löslichen Polysulfide in dem Elektrolyten bei 70 bis 90 % der Sättigungskonzentration der Polysulfide in dem Elektrolyten liegt.

6. Verfahren nach Anspruch 5, wobei die erste Entladungsstufe in einem Spannungsbereich von 2,5-2,4 V bis 2,1-1,9 V auftritt, und wobei die zweite Entladungsstufe in einem Spannungsbereich von 1,9 bis 1,8-1,5 V auftritt.

**Revendications**

1. Source chimique rechargeable d'énergie électrique comprenant une électrode positive (cathode) incluant du soufre ou des composés organiques à base de soufre, des composés polymères à base de soufre ou des composés inorganiques à base de soufre comme dépolarisant, une électrode négative (anode) constituée de lithium métallique ou d'alliages contenant du lithium, et un électrolyte comprenant une solution d'au moins un sel dans au moins un solvant aprotique, la source chimique d'énergie électrique étant configurée pour produire des polysulfures solubles dans l'électrolyte pendant une première étape d'un processus de décharge à deux étapes, **caractérisée en ce que** la quantité de soufre dans le dépolariseur et le volume d'électrolyte sont choisis de manière à ce que, après une décharge de première étape de la cathode, la concentration des polysulfures solubles dans l'électrolyte est de 70 % à 90 % de la concentration de saturation des polysulfures dans l'électrolyte.

2. Source chimique rechargeable d'énergie électrique telle que revendiquée dans la revendication 1, dans laquelle le dépolarisant comprend du soufre, du noir de carbone et de l'oxyde de polyéthylène.

3. Source chimique rechargeable d'énergie électrique telle que revendiquée dans une quelconque revendication précédente, dans laquelle l'électrolyte comprend une solution d'un ou plusieurs sels de lithium choisis parmi le groupe constitué de : trifluorométhanesulfonate de lithium, perchlorate de lithium, trifluorométhanesulfonimide de lithium, hexafluorophosphate de lithium, hexafluoroarsénate de lithium, tétrachloroaluminate de lithium, sel tétraalkylammonium, chlorure de lithium, bromure de lithium et iodure de lithium ; dans un ou plusieurs solvants choisis parmi le groupe constitué de : dioxolane, tétrahydrofurane, diméthoxyéthane, diglyme, triglyme, tétraglyme, carbonates de dialkyles, sulfolane et butyrolactone.

4. Source chimique rechargeable d'énergie électrique telle que revendiquée dans une quelconque revendication précédente, dans laquelle l'électrolyte comprend une solution d'un ou plusieurs sels de lithium choisis parmi le groupe constitué de : trifluorométhanesulfonate de lithium, perchlorate de lithium, trifluorométhanesulfonimide de lithium, hexafluorophosphate de lithium, hexafluoroarsénate de lithium, tétrachloroaluminate de lithium, sel tétraalkylammonium, chlorure de lithium, bromure de lithium et iodure de lithium dans du sulfolane.

5. Procédé de décharge d'une source chimique rechargeable d'énergie électrique tel que revendiqué dans une quelconque revendication précédente en deux étapes, ledit procédé comprenant les étapes de :

configuration de la source chimique d'énergie pour produire des polysulfures solubles dans l'électrolyte pendant une première étape du processus de décharge à deux étapes ; et
sélection de la quantité de soufre dans le dépolarisant et le volume d'électrolyte de manière à ce que, après la décharge de première étape de la cathode, la concentration des polysulfures solides dans l'électrolyte, est de 70 à 90 % de la concentration de saturation des polysulfures dans l'électrolyte.

6. Procédé tel que revendiqué dans la revendication 5, dans lequel la première étape de décharge se déroule dans une plage de tensions de 2,5-2,4 V à 2,1-1,9 V, et dans lequel la seconde étape de décharge se déroule dans une plage de tensions de 1,9 à 1,8-1,5 V.

Fig 1. Discharge curve of a Li-S battery

## REFERENCES CITED IN THE DESCRIPTION

### Patent documents cited in the description

- US 5789108 A
- US 5814420 A
- US 6090504 A
- US 6201100 B
- US 6174621 B
- US 6117590 A

### Non-patent literature cited in the description

- **D. LINDEN ; T.B. REDDY.** Handbook of batteries. McGraw-Hill, 2001
- **RAUH R.D. ; ABRAHAM K.M. ; PEARSON G.F. ; SURPRENANT J.K. ; BRUMMER S.B.** A lithium/dissolved sulphur battery with an organic electrolyte. *J. Electrochem.Soc.,* 1979, vol. 126 (4), 523-527
- **YAMIN H. ; PELED E.** Electrochemistry of a nonaqueous lithium/sulphur cell. *J. of Power Sources,* 1983, vol. 9, 281-287
- **YAMIN H. ; PENCINER J. ; GORENSHTAIN A. ; ELAM M. ; PELED E.** The electrochemical behavior of polysulphides in tetrahydrofuran. *J. of Power Sources,* 1985, vol. 14, 129-134
- **YAMIN H. ; GORENSHTEIN A. ; PENCINER J. ; STERNBERG Y. ; PELED E.** Lithium sulphur battery. oxidation/reduction mechanisms of polysulphides in THF solution. *J. Electrochem. Soc.,* 1988, vol. 135 (5), 1045-1048
- **DUCK-RYE CHANG ; SUCK-HYUN LEE ; SUN-WOOK KIM ; HEE-TAK KIM.** Binary electrolyte based on tetra(ethylene glycol) dimethyl ether and 1,3-dioxolane for lithium-sulphur battery. *J. of Power Sources,* 2002, vol. 112, 452-460
- **J. BROADHEAD ; T. SKOTHEIM.** A safe, fast-charge, two-volt lithium/polymer cathode 'AA'-size cell with a greater than 250 Wh kg-1 energy density. *Journal of Power Sources,* 1997, vol. 65 (1-2), 213-218
- **PELED E. ; GORENSHTEIN A. ; SEGAL M. ; STERNBERG Y.** Rechargeable lithium-sulphur battery (extended abstract). *J. of Power Sources,* 1989, vol. 26, 269-271